# EUROPEAN PATENT APPLICATION

(11) **EP 4 742 594 A1**
(43) Date of publication of application: **13.05.2026**
(21) Application number: 24930342.1
(22) Date of filing: 19.08.2024
(51) Int. Cl.: H04L 9/40

(54) **SOFTWARE-DEFINED-NETWORK-BASED CLOUD-EDGE COLLABORATIVE DEFENSE SYSTEM AND METHOD FOR UNKNOWN ATTACKS**

(30) Priority: 20.03.2024 CN 202410321312
(71) Applicant: State Grid Smart Grid Research Institute Co., Ltd., Beijing 102209 (CN); State Grid Henan Electric Power Company, Zhengzhou, Henan 450000 (CN); Electric Power Research Institute of State Grid Henan Electric Power Company, Zhengzhou, Henan 450000 (CN); State Grid Corporation of China, Beijing 100031 (CN)
(72) Inventor: ZHANG, Bo, Nanjing, Jiangsu 210000 (CN); ZHANG, Tao, Nanjing, Jiangsu 210000 (CN); MA, Yuanyuan, Nanjing, Jiangsu 210000 (CN); CHEN, Lu, Nanjing, Jiangsu 210000 (CN); XI, Zesheng, Nanjing, Jiangsu 210000 (CN); HE, Chuan, Nanjing, Jiangsu 210000 (CN); WANG, Yunfan, Nanjing, Jiangsu 210000 (CN); YU, Xinsheng, Nanjing, Jiangsu 210000 (CN); XIE, Guangwei, Nanjing, Jiangsu 210000 (CN); LYU, Zhuo, Nanjing, Jiangsu 210000 (CN); LI, Nuannuan, Nanjing, Jiangsu 210000 (CN)
(74) Representative: Cabinet Camus Lebkiri
(86) International application number: PCT/CN2024/113082
(87) International publication number: WO 2025/194680

(57) **Abstract**

The present application relates to the technical field of network security. Disclosed are a software-defined-network-based cloud-edge collaborative defense system and method for unknown attacks. The system comprises a main station deployed at a cloud end and a plurality of edge stations deployed at an edge end. A software defined security platform comprises a main controller, a security controller and a security component resource pool. Any one of the edge stations comprises an edge controller. The security controller is configured to receive network security information uploaded by the main controller and/or any one of the edge controllers, identify an unknown attack on the basis of the network security information, generate a corresponding defense strategy and issue the defense strategy to the security component resource pool, the main controller and/or any one of the edge controllers. The security component resource pool is configured to virtualize a security protection function into a security component, and configure the main station and/or any one of the edge stations with the security component on the basis of the network security information or the defense strategy. The problem of traditional static and rigid defense measures and strategies being unable to meet the requirements for defending against unknown attacks is solved.

## Description

### CROSS REFERENCE TO RELATED APPLICATION(S)

The present disclosure is based on and claims priority to Chinese Patent Application No. 202410321312.6, filed on March 20, 2024, entitled "a cloud-edge collaborative defense system and method for an unknown attack based on software-defined networks", the entire contents of which are incorporated herein by reference in its entirety.

### TECHNICAL FIELD

The present disclosure relates to the field of network security technologies, and in particular, to a cloud-edge collaborative defense system and a method for an unknown attack based on software-defined networks.

### BACKGROUND

In new business terminal access scenarios, unknown attack targets are random and diverse, attack paths are dynamically variable, and attack methods are heterogeneous and diverse. Existing security access and attack defense systems lack flexibility in deployment methods and protection capabilities, and cannot adjust defense strategy in a timely and effective manner, resulting in poor effectiveness of defense against unknown attacks. The processing power of edge devices in existing cloud-edge collaborative defense systems is insufficient to provide rapid and accurate identification of unknown attacks, and to formulate corresponding defense strategies against such attacks, thus failing to effectively defend against unknown attacks. Therefore, existing technologies have the problem that traditional static and rigid defense measures and strategies cannot meet the requirements of defense against unknown attacks.

### SUMMARY

In view of this, the present disclosure provides a cloud-edge collaborative defense system and method for an unknown attack based on software-defined networks, in order to solve the problem that traditional static and rigid defense measures and strategies cannot meet the requirements of defense against unknown attacks.

In a first aspect, the present disclosure provides a cloud-edge collaborative defense system for an unknown attack based on software-defined networks, the system includes: a main station deployed in a cloud end and a plurality of edge stations deployed at an edge end. A control plane of the main station includes a software-defined security platform, the software-defined security platform includes a main controller, a security controller, and a security component resource pool. Any edge station includes an edge controller. The security controller is configured to receive network security information uploaded by the main controller and/or any edge controller, identify the unknown attack according to the network security information, generate a corresponding defense strategy according to the identified unknown attack, and send the defense strategy to the security component resource pool, the main controller, and/or any edge controller. The security component resource pool is configured to virtualize a security protection function into a security component and configure the security component for the main station and/or any edge station according to the network security information or defense strategy.

In embodiments of the present disclosure, a software-defined network architecture is adopted to uniformly manage the cloud end and the edge end through the security controller. By interacting and cooperating with the security controller, the main controller, the edge controller, and the security component resource pool, the system achieves real-time monitoring of cloud-edge network security information, timely identification of unknown cloud-edge attacks, and flexible adjustment of defense strategy. As a result, it is possible to solve the problem that traditional static and rigid defense measures and insufficient processing capabilities of edge devices in cloud-edge collaborative environment make it difficult to quickly identify and respond to unknown attacks. Improved response speed and network security are achieved through centralized management and sending of defense strategy. By separating the data plane and control plane, the system enables network control and data forwarding to be performed independently, thereby improving network flexibility and facilitating expansion and upgrades. As a result, the problem of traditional static and rigid defense measures and strategies being unable to meet the requirements for defending against unknown attacks is solved.

In an optional implementation, a data plane of the main station includes an infrastructure layer. The software-defined security platform interacts with the infrastructure layer through a southbound interface based on a programmability of the software-defined network architecture. The infrastructure layer includes a network device. The main controller is configured to control and manage the network device and to transmit data and interact with the edge controller through the network device and a preset communication protocol. The main controller is further configured to obtain a real-time traffic and a network topology of the main station network boundary. The edge controller is configured to obtain the real-time network traffic and a security event of a corresponding edge station.

In embodiments of the present disclosure, the programmability of software-defined networks is utilized to achieve the purpose of sharing network information and coordinating decision-making among the plurality of controllers (i.e., the main controller and a plurality of edge controllers), thereby achieving the effect of cloud-edge collaboration and unified management.

In an optional implementation, the edge station further includes an edge intelligent device, and the security component includes: a security admission component, a security access component, and a security monitoring component. The security admission component is configured to authenticate and control the edge intelligent device; the security access component is configured to encrypt the network traffic of the edge intelligent device and transmit data using tunneling technology; and the security monitoring component is configured to monitor traffic, acquire the security event and alarm information, and upload the security event and alarm information to the security controller.

In embodiments of the present disclosure, the security component virtualized by the security protection function is used to provide security services to the system, thereby improving the ease of deployment and security of the security protection function in different environments.

In an optional implementation, the security controller is further configured to acquire an attack feature database and an attack defense strategy database, identify the unknown attack according to the attack feature database and network security information using machine learning algorithms, and generate defense strategy corresponding to the unknown attack according to the attack defense strategy database and the unknown attack using the machine learning algorithms.

In embodiments of the present disclosure, a purpose of dynamic and flexible defense against dispersed and random unknown attacks is achieved through the security controller, thereby achieving an effect of timely and reliable defense against unknown attacks.

In an optional implementation, the main controller is further configured to send defense strategy to the network device and dynamically adjust network configuration and behavior.

In embodiments of the present disclosure, by dynamically adjusting the network configuration and behavior through the main controller, a purpose of filtering intrusion traffic and dynamically blocking intrusion behavior is achieved, thereby further improving the security defense capability of the system.

In an optional implementation, the edge intelligent device is configured to intercept and handle the unknown attack according to the defense strategy and the security component configured by the security controller, acquire unknown attack information, and send the unknown attack information to the edge intelligent device of other edge stations.

In embodiments of the present disclosure of the disclosure, by sharing unknown attack information among the plurality of edge stations, the capability of edge intelligent devices to defend against unknown attacks is improved.

In a second aspect, the present disclosure provides a cloud-edge collaborative defense method for an unknown attack based on software-defined networks adopting the cloud-edge collaborative defense system for the unknown attack based on software-defined networks describe in the first aspect or any corresponding implementation of the system. The method is applied to the security controller and includes: receiving network security information uploaded by the main controller and/or any edge controller; identifying the unknown attack according to the network security information; generating corresponding defense strategy according to the identified unknown attack; sending the defense strategy to the security component resource pool, the main controller, and/or any edge controller, the security component resource pool is configured to virtualize the security protection function into the security component; and controlling the security component resource pool to configure the security component for the main station and/or any edge station according to the network security information or the defense strategy.

In embodiments of the present disclosure, the security controller receives network security information uploaded by the cloud-edge controller (i.e., the main controller and the edge controller), thereby achieving the purpose of timely identification of unknown cloud-edge attacks and flexible sending of defense strategy. As a result, it is possible to solve the problem that traditional static and rigid defense measures and insufficient processing capabilities of edge devices in the cloud-edge collaborative environment make it difficult to quickly identify and respond to unknown attacks. The effect of improving response speed and network security is achieved, and the problem that traditional static and rigid defense measures and strategy in related art cannot meet the requirements of defense against unknown attacks is solved.

In an optional implementation, the receiving network security information uploaded by the main controller and/or any edge controller includes: receiving real-time traffic information and network topology of the main station network boundary uploaded by the main controller; and/or receiving the real-time network traffic and the security event of the corresponding edge station uploaded by any edge controller.

In embodiments of the present disclosure, a purpose of real-time monitoring of the cloud end and the edge end is achieved by receiving network security information corresponding to the main controller and the edge controller.

In an optional implementation, the controlling the control security component resource pool to configure the security component for the main station and/or any edge station according to network security information or the defense strategy, including: controlling the control security component resource pool to configure the security component for the main station according to the defense strategy or the real-time traffic information and the network topology of the main station network boundary; and/or, controlling the control security component resource pool to configure the security component for any edge station according to the defense strategy or the real-time network traffic and the security event of the edge station.

In embodiments of the present disclosure, by configuring security components for the main station and the edge station, the purpose of flexibly configuring security protection functions for the main station and the edge station is achieved.

In an optional implementation, after the controlling the control security component resource pool to configure the security component for any edge station according to the defense strategy or the real-time network traffic and the security event of the edge station, the method further includes: obtaining the security event and alarm information of any edge station using the security component; and identifying the unknown attack according to the attack feature database, the network security information, the security event and the alarm information using machine learning algorithms.

In embodiments of the present disclosure, machine learning algorithms are used to jointly identify unknown attacks according to the attack feature database, the network security information, the security event, and the alarm information, thereby further improving the accuracy and reliability of identifying unknown attacks.

In a third aspect, the present disclosure provides a computer-readable storage medium, the computer-readable storage medium stores computer instructions for causing a computer to execute the cloud-edge collaborative defense method for the unknown attack based on software-defined networks described in the second aspect or any corresponding embodiment of the method.

### BRIEF DESCRIPTION OF THE DRAWINGS

FIG. 1 is a schematic diagram of a cloud-edge collaborative defense system for an unknown attack based on software-defined networks, in accordance with an embodiment of the present disclosure;
FIG. 2 is a schematic diagram of another cloud-edge collaborative defense system for an unknown attack based on software-defined networks, in accordance with an embodiment of the present disclosure;
FIG. 3 is a schematic diagram of yet another cloud-edge collaborative defense system for an unknown attack based on software-defined networks, in accordance with an embodiment of the present disclosure;
FIG. 4 is an overall schematic diagram of a cloud-edge collaborative defense system for an unknown attack based on software-defined networks, in accordance with an embodiment of the present disclosure;
FIG. 5 is a flowchart illustrating a cloud-edge collaborative defense method for an unknown attack based on software-defined networks, in accordance with an embodiment of the present disclosure;
FIG. 6 is a flowchart illustrating another cloud-edge collaborative defense method for an unknown attack based on software-defined networks, in accordance with an embodiment of the present disclosure; and
FIG. 7 is a schematic diagram of an overall framework of the software-defined security platform, in accordance with an embodiment of the present disclosure.

### DETAILED DESCRIPTION

In order to make the purpose, technical solutions and advantages of the embodiments of the present disclosure clear, the technical solutions in the embodiments of the present disclosure will be described clearly and completely with reference to the accompanying drawings in the embodiments of the present disclosure. However, the described embodiments are merely some but not all of embodiments of the present disclosure. Based on the embodiments in the present disclosure, all other embodiments obtained by those ordinary skilled in the art without creative efforts shall fall within the protection scope of the present disclosure.

It will be noted that the terms such as "first" and "second" in the description of the present disclosure are used for distinguishing between similar objects, but not necessarily used for describing a particular sequence or precedence order. It should be understood that the data used in this way may be interchanged where appropriate so that the embodiments of the present disclosure described herein can be implemented in a sequence other than those illustrated or described herein. Furthermore, the terms "comprising" and "having", and any variations thereof, are intended to cover non-exclusive inclusion, such that a process, method, system, product, or apparatus that includes a series of steps or units is not necessarily limited to those steps or units that are explicitly listed, but may include other steps or units that are not explicitly listed or that are inherent to such process, method, product, or apparatus. Orientations or positional relationships indicated by the terms such as "center," "upper," "lower," "left," "right," "vertical," "horizontal," "inner," "outer," and the like are based on orientations or positional relationships shown in the drawings, which are merely to facilitate and simplify the description of the present disclosure, and are not to indicate or imply that the devices or elements referred to must have a particular orientation, or must be constructed or operated in a particular orientation, therefore, it cannot be construed as a limitation on this disclosure. The terms "installation", "connection" and "linking" should be understood in a broad sense. For example, it may be a fixed connection, a detachable connection, or an integral connection; it may be a mechanical connection or an electrical connection; and it may be a direct connection, or may be an indirect connection through an intermediate medium, and may be internal communication between two elements, it may be a wireless connection or a wired connection. Specific meanings of the above terms in the present disclosure may be understood by those ordinary skills in the art according to specific situations.

In addition, if the word "and/or" appears in the present disclosure, it includes three parallel solutions. For example, "A and/or B" includes solution A, solution B, or a solution that satisfies both A and B. Furthermore, the technical solutions of the various embodiments can be combined with each other, but only if they are based on the ability of those skilled in the art to implement them. When the combination of technical solutions is contradictory or cannot be implemented, it should be considered that such combination of technical solutions does not exist and is not within the scope of protection claimed in the present disclosure.

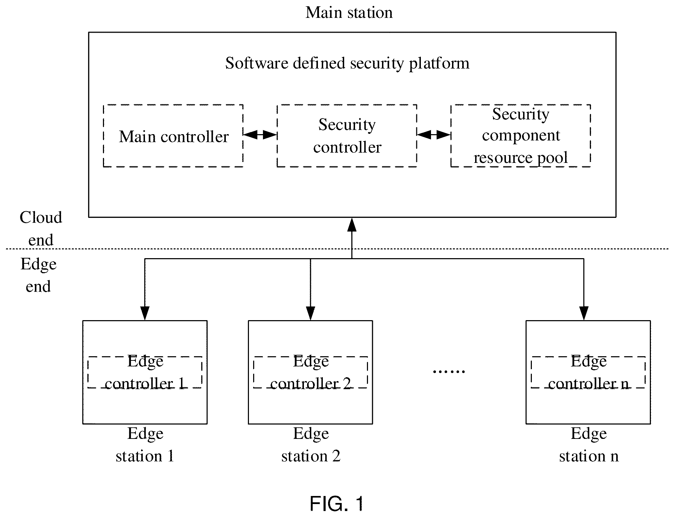

According to an embodiment of the present disclosure, an embodiment of a cloud-edge collaborative defense system for an unknown attack based on software-defined networks is provided. FIG. 1 is a schematic diagram of the cloud-edge collaborative defense system for the unknown attack based on software-defined networks, in according with an embodiment of the present disclosure. As shown in FIG. 1, the system includes a main station deployed in a cloud end and a plurality of edge stations (edge station 1 ... edge station n) deployed at an edge end. The system is based on a software defined network (SDN) architecture that separates a data plane and a control plane. The control plane of the main station includes a software-defined security platform, the software-defined security platform includes a main controller, a security controller, and a security component resource pool. Any edge station includes an edge controller. It should be noted that the main controller, the edge controller, and the security controller each are an SDN controller. The security controller is configured to receive network security information uploaded by the main controller and/or any edge controller. The network security information, for example, may include real-time network traffic information, a security event, a network topology, and the like. The security controller identifies the unknown attack of the main station and/or any edge station by using methods such as behavior analysis, machine learning, and anomaly detection according to the network security information. According to the identified unknown attack, the security controller generates a corresponding defense strategy and sends the defense strategy to the security component resource pool, the main controller, and/or any edge controller. The security component resource pool uses container technology to virtualize a security protection function into a security component. The security component may achieve security services such as identity authentication, access control, data encryption, and traffic monitoring. The security controller is further configured to configure the security component for the main station and/or any edge station according to network security information or the defense strategy.

In embodiments of the present disclosure, a software-defined network architecture is adopted to uniformly manage the cloud end and the edge end through the security controller. The purpose of real-time monitoring of cloud-edge network security information, timely identification of unknown cloud-edge attacks, and flexible adjustment of defense strategy is achieved through information interaction and collaborative work among the security controller, the main controller, the edge controller, and the security component resource pool. As a result, it is possible to solve the problem that traditional static and rigid defense measures and insufficient processing capabilities of edge devices in cloud-edge collaborative environment make it difficult to quickly identify and respond to unknown attacks. The effect of improving response speed and network security is achieved through centralized management and sending of defense strategy, the problem that traditional static and rigid defense measures and strategy in related art cannot meet the requirements of defending against unknown attacks is solved.

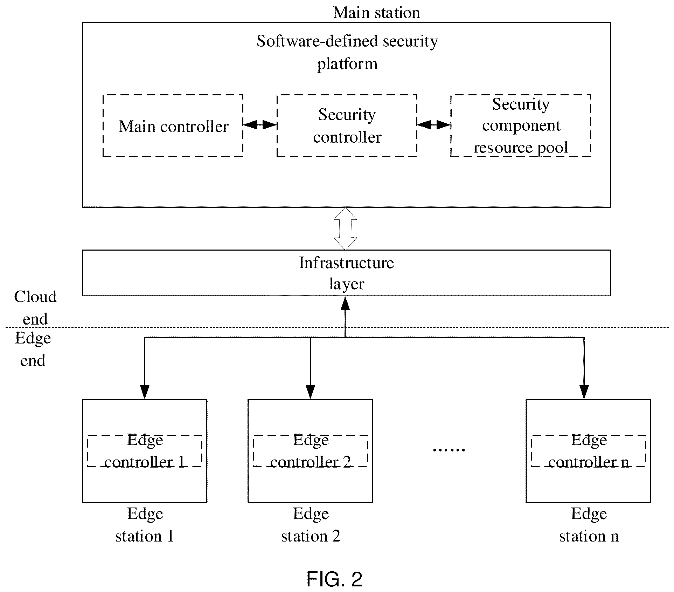

In an optional implementation, FIG. 2 is a schematic diagram of another cloud-edge collaborative defense system for the unknown attack based on software-defined networks, in according with an embodiment of the present disclosure. As shown in FIG. 2, the data plane of the main station includes an infrastructure layer, the infrastructure layer includes a network device such as a switch and a router. The software-defined security platform interacts with the infrastructure layer through a southbound interface based on the programmability of the software-defined network architecture. The main controller is configured to control and manage the network device, and to transmit data and interact with the edge controller through the network device and a preset communication protocol. For example, the software-defined security platform interacts with infrastructures such as switches and routers in the infrastructure layer through the southbound interface. The infrastructure layer is responsible for forwarding, exchanging, and transmitting data packets and performs corresponding operations according to the instructions sent by the software-defined platform. The main controller is further configured to acquire real-time traffic and network topology of a main station network boundary, and the edge controller is configured to acquire real-time network traffic and the security event of the corresponding edge station.

In embodiments of the present disclosure, by separating the data plane and the control plane, the purpose of enabling network control and data forwarding to be performed independently is achieved, thereby improving network flexibility and facilitating expansion and upgrades. By utilizing the programmability of software-defined networks, the purpose of sharing network information and coordinating decision-making among a plurality of controllers (i.e., the main controller and the plurality of edge controllers) is achieved, thereby achieving the effect of cloud-edge collaboration and unified management.

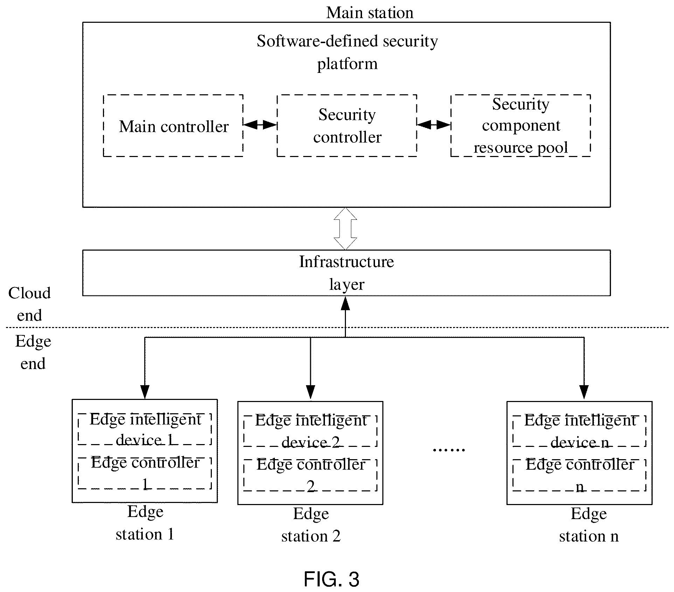

In an optional implementation, FIG. 3 is a schematic diagram of another cloud-edge collaborative defense system for the unknown attack based on software-defined networks, in accordance with an embodiment of the present disclosure. As shown in FIG. 3, the edge station further includes an edge intelligent device, such as an edge server, a terminal, and a smartphone. The security component is an abstract security component obtained by using container technology such as container engines (Docker) to virtualize the security protection function from the security component resource pool. The security component includes: a security admission component, a security access component, and a security monitoring component. It should be noted that, considering the complex security requirements and differentiated operating environments brought about by different application scenarios in the new business access environment, a large number of security protection functional components need to be constructed, which presents the problem of complex deployment architecture and difficulty in implementation. Therefore, container technology is used to virtualize the security protection function required by each edge station and abstract it into security component, so as to facilitate deployment in different operating environments. The security admission component may authenticate and control the access of edge smart devices, preventing unauthorized access and attacks. Only devices that have passed authentication and access control can access the network, thereby reducing the risk of edge smart devices being attacked by unknown forces. The security access component is configured to encrypt and tunnel the network traffic of edge smart devices, ensuring the security and reliability of data transmission. Encryption and tunneling may prevent unauthorized access and eavesdropping, thus achieving the purpose of protecting the data security of edge smart devices. The security monitoring component may be configured to perform traffic monitoring and local monitoring, and upload the generated event alarms and security logs to the security controller, thereby achieving the purpose of protecting the security of edge smart devices. It should be noted that the present disclosure does not limit the security component; that is, the system may virtualize and implement security components for other security services according to specific requirements.

In embodiments of the present disclosure, the security component virtualized by the security protection function is used to provide security services to the system, thereby improving the ease of deployment and security of the security protection function in different environments.

In an optional implementation, the security controller is further configured to acquire an attack feature database and an attack defense strategy database, and to use machine learning algorithms, according to the attack feature database, to analyze and evaluate attack information such as network security information, thereby identifying the unknown attack. In addition, the security controller is further configured to use machine learning algorithms to generate corresponding defense strategy, according to the attack defense strategy database and the identified unknown attack. As an example, the security controller can use machine learning algorithms to analyze the type of unknown attack and dynamically generate corresponding defense strategy according to the attack defense strategy database, such as access control rules and firewall rules. In embodiments of the present disclosure, the security controller achieves the purpose of dynamic and flexible defense against dispersed and random unknown attacks, thus achieving the effect of timely and reliable defense against unknown attacks.

In an optional implementation, the main controller is further configured to send defense strategy to the network device and dynamically adjust network configuration and behavior. For example, the main controller can send defense strategy to the network device such as an SDN switch, thereby filtering intrusion traffic and dynamically blocking intrusion behavior, thus further improving the security defense capability of the system.

In an optional implementation, the edge intelligent device is configured to intercept and handle the unknown attack according to the defense strategy and the security component configured by the security controller, acquire unknown attack information, and send the unknown attack information to edge intelligent devices of other edge stations. In embodiments of the present disclosure, the edge intelligent device intercepts and handles the unknown attack according to the defense strategy and the allocated security component. Meanwhile, it may send information related to the attack to the edge intelligent devices of other edge stations, enabling them to defend against such attacks.

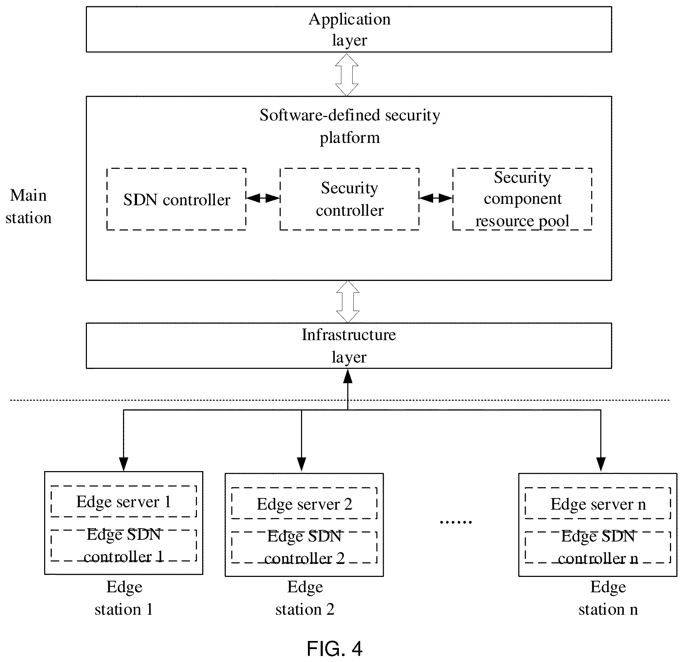

In an optional implementation, FIG. 4 is an overall schematic diagram of a cloud-edge collaborative defense system for the unknown attack based on software-defined networks, in accordance with an embodiment of the present disclosure. As shown in FIG. 4, the system includes the main station and the plurality of edge stations (edge station 1 ... edge station n). The main station includes an application layer, the software-defined security platform, and the infrastructure layer. The software-defined security platform includes an SDN controller (i.e., the main controller), the security controller, and the security component resource pool. Any edge station includes an edge server (i.e., the edge intelligent device) and an edge SDN controller (i.e., the edge controller). An application of the application layer of the main station interacts with the platform through a northbound interface of the software-defined platform, and uses the programmability of SDN to achieve functions such as network management, security management, traffic engineering optimization and cloud service management. The software-defined platform interacts with infrastructures such as switches and routers in the infrastructure layer through the southbound interface. The infrastructure layer is responsible for forwarding, switching and transmitting data packets, and executes corresponding operations according to the instructions sent by the software-defined platform. The software-defined security platform, combined with SDN controllers, edge SDN controllers, and the security component resource pool, may achieve dynamic defense against unknown attacks on edge intelligent devices and the main station network boundary. The security controller is responsible for traffic analysis, attack detection and identification, strategy orchestration and sending, as well as monitoring and managing the resources (security components) of the security component resource pool; the SDN controller is responsible for controlling and managing devices such as switches, secure admission gateways, and isolation devices in the infrastructure layer SDN network, monitoring global network and topology information, receiving strategy instruction (defense strategy) from the security controller, and adjusting network configuration and behavior in real time; the security component resource pool uses Docker container technology to virtualize the security protection function into the abstract security component, centrally storing, managing, and scheduling a series of virtual security components (such as the security admission component, the secure access component, and the security monitoring component) to provide security services for the system.

In embodiments of the present disclosure, a software-defined network architecture is adopted, through information interaction and collaborative work among the security controller, SDN controller, edge SDN controller, and security component resource pool, on the one hand, dynamic adjustment of defense resources and defense capabilities on the edge intelligent device side is achieved. On the other hand, unified scheduling and control of main station layer security protection devices such as security access gateways and isolation devices are achieved, thus achieving the purpose of dynamic, flexible, and reliable defense against dispersed and random unknown attacks.

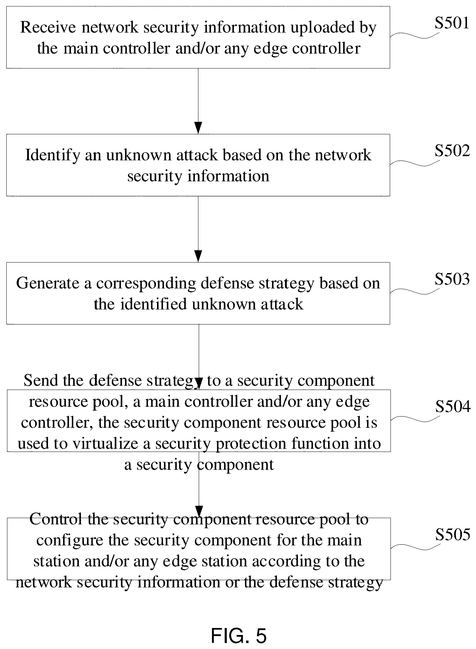

The present embodiment provides a cloud-edge collaborative defense method for an unknown attack based on software-defined networks, the method adopts the cloud-edge collaborative defense system for the unknown attack based on software-defined networks describe in the first aspect or any corresponding implementation of the system. The method is applied to a security controller. FIG. 5 is a flowchart illustrating the cloud-edge collaborative defense method for the unknown attack based on software-defined networks, in accordance with an embodiment of the present disclosure. It should be noted that although the logical order is shown in the flowchart, in some cases, the steps shown or described may be executed in a different order than that shown herein. As shown in FIG. 5, the method includes the following steps.

In step S501: receive network security information uploaded by the main controller and/or any edge controller. Optionally, the security controller can perform security monitoring on the main station and/or any edge station by receiving network security information uploaded by the main controller and/or any edge controller. Network security information includes the real-time network traffic information, the security event, the network topology, and the like.

In step S502: identify an unknown attack according to the network security information. Optionally, the security controller may use methods such as behavioral analysis, machine learning, and anomaly detection to identify the unknown attack on the main station and/or any edge station according to the network security information received in step S501.

In step S503: generate a corresponding defense strategy according to the identified unknown attack. Optionally, the security controller generates a corresponding defense strategy according to the unknown attack identified in step S502, thereby achieving the purpose of real-time, dynamic, and flexible adjustment of the defense strategy according to the unknown attack.

In step S504: send the defense strategy to the security component resource pool, the main controller and/or any edge controller. The security component resource pool is used to virtualize the security protection function into the security component. Optionally, the security controller sends the defense strategy corresponding to the unknown attack generated in step S503 to the security component resource pool, the main controller, and/or any edge controller, thereby enabling the main station and/or any edge station to perform security protection according to the dynamically adjusted defense strategy.

In step S505: control the security component resource pool to configure the security component for the main station and/or any edge station according to the network security information or the defense strategy. Optionally, the security controller may control the security component resource pool to configure the security component corresponding to the defense strategy for the main station and/or any edge station according to the generated defense strategy.

In embodiments of the present disclosure, the security controller receives network security information uploaded by the cloud-edge controller (i.e., the main controller and the edge controller), thereby achieving the purpose of timely identification of the unknown cloud-edge attack and flexible sending of defense strategy. As a result, it is possible to solve the problem that traditional static and rigid defense measures and insufficient processing capabilities of edge devices in the cloud-edge collaborative environment make it difficult to quickly identify and respond to unknown attacks. The effect of improving response speed and network security is achieved, and the problem that traditional static and rigid defense measures and strategies in related art cannot meet the requirements of defense against unknown attacks is solved.

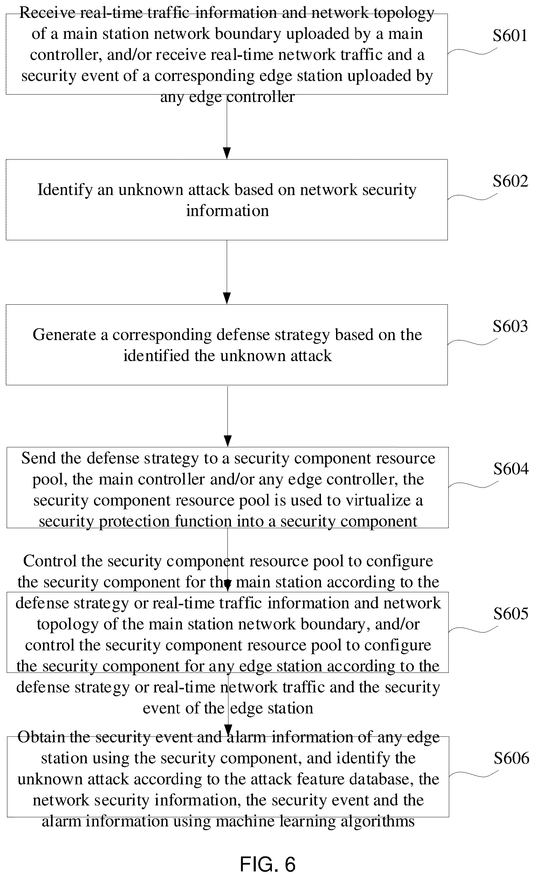

In an optional implementation, FIG. 6 is a flowchart illustrating another cloud-edge collaborative defense method for the unknown attack based on software-defined networks, in accordance with an embodiment of the present disclosure. As shown in FIG. 6, the process includes the following steps.

In step S601: receive network security information uploaded by the main controller and/or any edge controller. Step S601 includes: receiving real-time traffic information and network topology of the main station network boundary uploaded by the main controller, and/or receiving real-time network traffic and a security event of the corresponding edge station uploaded by any edge controller.

In step S602: identify the unknown attack according to the network security information. For details, please refer to step S502 of the embodiment shown in FIG. 5, which will not be repeated herein.

In step S603: generate a corresponding defense strategy according to the identified unknown attack. For details, please refer to step S503 of the embodiment shown in FIG. 5, which will not be repeated herein.

In step S604: send the defense strategy to the security component resource pool, the main controller and/or any edge controller. The security component resource pool is used to virtualize the security protection function into the security component. For details, please refer to step S504 of the embodiment shown in FIG. 5, which will not be repeated herein.

In step S605: control the security component resource pool to configure the security component for the main station and/or any edge station according to network security information or defense strategy. Step S605 includes: controlling the security component resource pool to configure the security component for the main station according to the defense strategy or real-time traffic information and network topology of the main station network boundary, and/or controlling the security component resource pool to configure the security component for any edge station according to the defense strategy or real-time network traffic and the security event of the edge station. In other words, the security controller may monitor the network security information of the main station and/or any edge station respectively, generate corresponding defense strategy, and control the security component resource pool to configure the security component for the main station and/or any edge station according to the corresponding defense strategy, so that the main station and/or any edge station can resist the unknown attack according to the dynamically adjusted defense strategy and the configured security component.

In an optional implementation, after the step S605 controls the security component resource pool to configure the security component for any edge station according to the defense strategy or the real-time network traffic and the security event of the edge station, the method further includes the following step.

In step S606: obtain the security event and alarm information of any edge station using the security component, and identify the unknown attack according to the attack feature database, network security information, the security event and alarm information using machine learning algorithms. Optionally, after allocating the security component to any edge station, the security component, such as security monitoring component, may be used to obtain the security event and the alarm information of any edge station. When identifying the unknown attack according to the network security information, the security event and the alarm information provided by the security component can be analyzed together to further improve the accuracy and reliability of unknown attack identification.

In an optional implementation, the steps of the cloud-edge collaborative defense system for the unknown attack according to software-defined networks to dynamically defend against the unknown attack on the edge intelligent devices include the following steps.

In step a1, system initialization. The security controller integrates and analyzes the network traffic, the security event, and the network topology uploaded by the edge controller to determine the security requirements of the edge station and allocates virtualized security component such as the security admission component, the security access component, and the security monitoring component.

In step a2, network status monitoring. After the edge controller obtains the security monitoring component, traffic information of the edge station is collected through the security monitoring component, the traffic information includes inbound/outbound traffic, transmission protocol, source IP (Internet Protocol) and destination IP.

In step a3, traffic analysis. The security monitoring component in the security component resource pool may share detected security event and alarm information with the security controller in the main station. The security controller uses machine learning algorithms to analyze and evaluate the information according to the information and the attack feature database, thereby identifying the unknown attack.

In step a4: strategy orchestration and sending. The security controller uses machine learning algorithms to analyze the type of the unknown attack according to the attack defense strategy database, dynamically generates corresponding defense strategy according to the analyzed attack type, and sends the defense strategy to the SDN controller and the security component resource pool.

In step a5, attack defense. The SDN controller sends the defense strategy to the edge controller, and the security component resource pool updates the security component in the security component resource pool according to the defense strategy, and selects appropriate defense components to provide to the edge intelligent devices. Edge intelligent devices intercept and handle unknown attacks according to the defense strategies and acquired security components.

In step a6, information sharing. Edge intelligent devices may send information related to this attack to other edge stations, enabling those edge stations to defend against this type of attack.

In an optional implementation, the steps of the cloud-edge collaborative defense system for the unknown attack based on software-defined networks to dynamically defend against the unknown attack on the main station network boundary include the following.

In step b1, network status monitoring. The SDN controller monitors the traffic of the main station network boundary and obtains real-time network traffic information.

In step b2, traffic analysis. The security controller obtains the real-time traffic information of the main station network boundary from the SDN controller, and uses machine learning algorithms to analyze and evaluate the real-time traffic information to identify the unknown attack.

In step b3: strategy orchestration and sending. The security controller uses machine learning algorithms to analyze the unknown attack according to the attack defense strategy database and dynamically generates corresponding defense strategy according to the attack type, and then sends the defense strategy to the SDN controller and the security component resource pool.

In step b4, attack defense. The security component resource pool dynamically configures the security component according to the defense strategy, and the SDN controller sends the rules of the defense strategy to the SDN switch, so as to achieve the purpose of filtering intrusion traffic and dynamically preventing intrusion behavior.

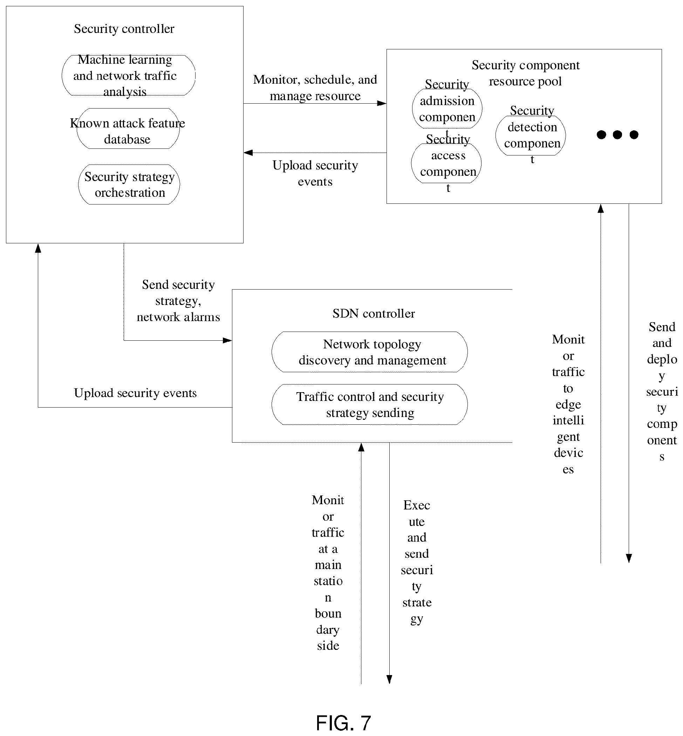

In an optional implementation, FIG. 7 is a schematic diagram of the overall framework of a software-defined security platform, in accordance with an embodiment of the present disclosure. As shown in FIG. 7, the software-defined security platform includes a security controller, an SDN controller, and a security component resource pool. The functions of the security controller include: machine learning and network traffic analysis, storing known attack feature databases, and security strategy orchestration. The functions of the SDN controller include: network topology discovery and management, traffic control, and security strategy distribution. The security component resource pool includes security components such as a security admission component, a security access component, and a security detection component. The security controller is configured to monitor, schedule, and manage the security component resource pool, send security strategy (defense strategy), send network alarms, and receive security events uploaded by the security component resource pool and the SDN controller. The SDN controller is configured to monitor traffic at a main station boundary side, execute and send security strategy, that is, send the defense strategy to the edge SDN controller. The security component resource pool is configured for monitoring traffic to edge intelligent devices and sending security components. In embodiments of the present disclosure, the purpose of real-time monitoring of cloud-edge network security information, timely identification of unknown cloud-edge attacks, and flexible adjustment of defense strategy is achieved through information interaction and collaborative work among the security controller, the SDN controller, and the security component resource pool. As a result, it is possible to solve the problem that traditional static and rigid defense measures and insufficient processing capabilities of edge devices in the cloud-edge collaborative environment make it difficult to quickly identify and respond to unknown attacks. The effect of improving response speed and network security is achieved through centralized management and sending of defense strategy, the problem that traditional static and rigid defense measures and strategy in related art cannot meet the requirements of defending against unknown attacks is solved.

The present disclosure further provides a computer-readable storage medium in which the methods described in the present disclosure may be implemented in hardware or firmware, or implemented as recordable on a storage medium, or implemented as computer code originally stored on a remote storage medium or a non-transitory machine-readable storage medium and to be stored on a local storage medium after being downloaded over a network, so that the methods described herein may be stored on such software processing on a storage medium using a general-purpose computer, a special-purpose processor, or programmable or special-purpose hardware. The storage medium may be a magnetic disk, optical disk, read-only memory, random access memory, flash memory, hard disk or solid-state drive, etc.; furthermore, the storage medium may further include a combination of the above types of memory. It can be understood that computers, processors, microprocessor controllers, or programmable hardware include storage components capable of storing or receiving software or computer code that, when accessed and executed by the computer, processor, or hardware, implement the methods shown in the above embodiments.

Although embodiments of the present disclosure have been described in conjunction with the accompanying drawings, those skilled in the art may make various modifications and variations without departing from the spirit and scope of the present disclosure, and all such modifications and variations fall within the scope defined by the appended claims.

## Claims

1. A cloud-edge collaborative defense system for an unknown attack based on software-defined networks, **characterized by** the system comprises: a main station deployed in a cloud end and a plurality of edge stations deployed at an edge end; a control plane of the main station includes a software-defined security platform, the software-defined security platform including: a main controller, a security controller, and a security component resource pool; any edge station includes: an edge controller; the security controller is configured to receive network security information uploaded by the main controller and/or any edge controller, identify the unknown attack according to the network security information, generate a corresponding defense strategy according to the identified unknown attack, and send the defense strategy to the security component resource pool, the main controller, and/or any edge controller; the security component resource pool is configured to virtualize a security protection function into a security component, and configure the security component for the main station and/or any edge station according to the network security information or the defense strategy.

2. The cloud-edge collaborative defense system for the unknown attack based on software-defined networks according to claim 1, wherein a data plane of the main station includes an infrastructure layer, the software-defined security platform interacts with the infrastructure layer through a southbound interface based on a programmability of a software-defined network architecture, the infrastructure layer includes a network device, the main controller is configured to control and manage the network device, and to transmit and interact with the edge controller through the network device and a preset communication protocol, the main controller is further configured to obtain a real-time traffic and a network topology of a main station network boundary, and the edge controller is configured to obtain a real-time network traffic and a security event of a corresponding edge station.

3. The cloud-edge collaborative defense system for the unknown attack based on software-defined networks according to claim 1, wherein the edge station further includes an edge intelligent device, and the security component includes: a security admission component, a security access component, and a security monitoring component; the security admission component is configured to perform identity authentication and access control on the edge intelligent device; the security access component is configured to encrypt a network traffic of the edge intelligent device and use tunneling technology for data transmission; the security monitoring component is configured to perform traffic monitoring, obtain the security event and alarm information, and upload the security event and the alarm information to the security controller.

4. The cloud-edge collaborative defense system for the unknown attack based on software-defined networks according to claim 1, wherein the security controller is further configured to acquire an attack feature database and an attack defense strategy database, identify the unknown attack using a machine learning algorithm according to the attack feature database and the network security information, and generate a defense strategy corresponding to the unknown attack using the machine learning algorithm according to the attack defense strategy database and the unknown attack.

5. The cloud-edge collaborative defense system for the unknown attack based on software-defined networks according to claim 2, wherein the main controller is further configured to send the defense strategy to the network device and dynamically adjust network configuration and behavior.

6. The cloud-edge collaborative defense system for the unknown attack based on software-defined networks according to claim 3, wherein the edge intelligent device is configured to intercept and handle the unknown attack according to the defense strategy and the security component configured by the security controller, obtain unknown attack information, and send the unknown attack information to edge intelligent devices of other edge stations.

7. A cloud-edge collaborative defense method for an unknown attack based on software-defined networks, adopting the cloud-edge collaborative defense system for the unknown attack based on software-defined networks according to any one of claims 1 to 6, applied to the security controller, **characterized by** the method comprises:
receiving the network security information uploaded by the main controller and/or any edge controller;
identifying the unknown attack according to the network security information;
generating the corresponding defense strategy according to the identified unknown attack;
sending the defense strategy to the security component resource pool, the main controller and/or any edge controller, wherein the security component resource pool is configured to virtualize the security protection function into the security component; and
controlling the control security component resource pool to configure the security component for the main station and/or any edge station according to the network security information or the defense strategy.

8. The cloud-edge collaborative defense method for the unknown attack based on software-defined networks according to claim 7, wherein the receiving the network security information uploaded by the main controller and/or any edge controller, comprises:
receiving real-time traffic information and network topology of a main station network boundary uploaded by the main controller;
and/or, receiving real-time network traffic and a security event of a corresponding edge station uploaded by any edge controller.

9. The cloud-edge collaborative defense method for the unknown attack based on software-defined networks according to claim 8, wherein the controlling the control security component resource pool to configure the security component for the main station and/or any edge station according to the network security information or the defense strategy, comprising:
controlling the security component resource pool to configure the security component for the main station according to the defense strategy or real-time traffic information and a network topology of the main station network boundary;
and/or, controlling the security component resource pool to configure the security component for any edge station according to the defense strategy or the real-time network traffic and the security event of the edge station.

10. The cloud-edge collaborative defense method for the unknown attack based on software-defined networks according to claim 9, wherein after the controlling the security component resource pool to configure the security component for any edge station according to the defense strategy or the real-time network traffic and the security event of the edge station, the method further comprises:
obtaining the security event and the alarm information from any edge station using the security component;
identifying the unknown attack according to an attack feature database, the network security information, the security event, and the alarm information using a machine learning algorithm.

11. A computer readable storage medium, **characterized by** the computer readable storage medium comprises computer instructions, and the computer instructions, when executed on a computer, cause the computer to execute the cloud-edge collaborative defense method for the unknown attack based on software-defined networks according to any one of claims 7 to 10.
